(19) Europäisches Patentamt
European Patent Office
Office européen des brevets

(11) **EP 3 096 128 A1**

(12) **EUROPEAN PATENT APPLICATION**

(43) Date of publication:
**23.11.2016 Bulletin 2016/47**

(51) Int Cl.:
*G01N 21/31* *(2006.01)*       *G01N 21/552* *(2014.01)*

(21) Application number: **15168036.0**

(22) Date of filing: **18.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Nokia Technologies Oy**
**02610 Espoo (FI)**

(72) Inventors:
• **Harris, Nadine**
  **Cambridge, CB3 0FA (GB)**
• **Astley, Michael**
  **Cambridge, CB25 9HP (GB)**
• **White, Richard**
  **Huntingdon, PE28 9DY (GB)**

(74) Representative: **Potter Clarkson LLP**
  **The Belgrave Centre**
  **Talbot Street**
  **Nottingham NG1 5GG (GB)**

(54) **A PLASMON RESONANCE SENSOR**

(57)    An apparatus (517) comprising a deformable member (518), the deformable member configured such that it is mechanically deformable between different configurations each associated with a respective plasmon resonance when the deformable member is exposed to incident electromagnetic radiation in that configuration, wherein the apparatus is configured such that one or more of the length of the deformable member in the configuration and the associated incident electromagnetic radiation are detectable.

## Figure 6

**Description**

Technical Field

The present disclosure relates to the field of plasmon resonance sensors, associated methods and apparatus, and specifically concerns an apparatus for use in detecting one or more of electromagnetic radiation and mechanical deformation using a deformable member configured to exhibit a variable plasmon resonance dependent upon the configuration of the deformable member. Some examples may be suitable for the detection of secondary stimuli which cause an associated mechanical deformation of the deformable member.

Certain disclosed example aspects/embodiments relate to portable electronic devices, in particular, so-called hand-portable electronic devices which may be hand-held in use (although they may be placed in a cradle in use). Such hand-portable electronic devices include so-called Personal Digital Assistants (PDAs), smartwatches, smart eyewear and tablet PCs.

The portable electronic devices/apparatus according to one or more disclosed example aspects/embodiments may provide one or more audio/text/video communication functions (e.g. tele-communication, video-communication, and/or text transmission, Short Message Service (SMS)/ Multimedia Message Service (MMS)/emailing functions, interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

Background

Research is currently being done to develop new sensors with improved sensitivity.

The listing or discussion of a prior-published document or any background in this specification should not necessarily be taken as an acknowledgement that the document or background is part of the state of the art or is common general knowledge.

Summary

According to a first aspect, there is provided an apparatus comprising a deformable member, the deformable member configured such that it is mechanically deformable between different configurations each associated with a respective plasmon resonance when the deformable member is exposed to incident electromagnetic radiation in that configuration, wherein the apparatus is configured such that one or more of the length of the deformable member in the configuration and the associated incident electromagnetic radiation are detectable.

The apparatus may be configured to allow detection of the incident electromagnetic radiation based on detection of the plasmon resonance in the respective configuration.

The deformable member may be configured such that at least two of the lengths of the deformable member are associated with different types of incident electromagnetic radiation.

The apparatus may be configured to allow determination of the mechanical deformation of the deformable member based on detection of the plasmon resonance associated with a particular length of the deformable member.

The deformable member may be one or more of a stretchable and compressible member configured to allow the length of the deformable member to be increased or decreased between the respective configurations by the mechanical deformation.

The deformable member may be provided adjacent to a non-deformable plasmonic nanoparticle, the deformable member and the non-deformable plasmonic nanoparticle collectively forming a single combined adjacent plasmonic nanoparticle configured to exhibit a combined plasmon resonance when exposed to the incident electromagnetic radiation, and the mechanical deformation may produce a change in the combined plasmon resonance of the single combined adjacent plasmonic nanoparticle.

The deformable member may be interpositioned between first and second non-deformable plasmonic nanoparticles, the deformable member and non-deformable plasmonic nanoparticles collectively forming a single combined interpositioned plasmonic nanoparticle configured to exhibit a combined plasmon resonance when exposed to the incident electromagnetic radiation, and the mechanical deformation may produce a change in the combined plasmon resonance of the single combined interpositioned plasmonic nanoparticle.

The deformable member and non-deformable plasmonic nanoparticles may each have a long axis and a short axis, and the long axis of the deformable member may be collinear with the long axes of the first and second non-deformable plasmonic nanoparticles.

At least one of the size, shape and material of the deformable member and/or non-deformable plasmonic nanoparticles may be configured such that the plasmon resonance/combined plasmon resonance is exhibited when exposed to one or more of ultraviolet, visible and infrared radiation.

The non-deformable plasmonic nanoparticles may have one or more of the same size, shape and material as one another.

The apparatus may comprise one or more further non-deformable plasmonic nanoparticles, and the first, second and further non-deformable plasmonic nanoparticles may be arranged such that each non-deformable plasmonic nanoparticle is connected to an adjacent non-deformable plasmonic nanoparticle by a respective deformable member.

The deformable member connecting one pair of adjacent non-deformable plasmonic nanoparticles may comprise the same material as, or a different material than, the deformable member connecting another pair of adjacent non-deformable plasmonic nanoparticles.

The deformable member and non-deformable plasmonic nanoparticles may have one, two or three dimensions in the nanoscale.

The deformable member and non-deformable plasmonic nanoparticles may comprise different structural forms of the same material.

The deformable member and non-deformable plasmonic nanoparticles may comprise different structural forms of one or more of a noble metal, gold, platinum, silver and aluminium.

The non-deformable plasmonic nanoparticles may comprise one or more of nanorods, nanowires and nanotubes.

The deformable member may comprise a reversibly deformable material.

The mechanical deformation may comprise one or more of tensile and compressive strain.

The deformable member may comprise one or more of a conductive (nano)foam, a conductive (nano)polymer and a conductive (nano)elastomer.

The apparatus/deformable member may be configured such that the mechanical deformation results from one or more of thermal expansion/contraction of the apparatus, acceleration of the apparatus, an internal/external pressure acting on the apparatus, and exposure of the apparatus to an electromagnetic field.

The apparatus may be one or more of an electronic device, a portable electronic device, a portable telecommunications device, a mobile phone, a personal digital assistant, a tablet, a phablet, a desktop computer, a laptop computer, a server, a smartphone, a smartwatch, smart eyewear, a sensor, a dynamically-tunable sensor, a mechanical deformation sensor, and a module for one or more of the same.

According to a further aspect, there is provided a method of making an apparatus, the method comprising:

forming a deformable member configured such that it is mechanically deformable between different configurations each associated with a respective plasmon resonance when the deformable member is exposed to incident electromagnetic radiation in that configuration, wherein the apparatus is configured such that one or more of the length of the deformable member in the configuration and the associated incident electromagnetic radiation are detectable.

According to a further aspect, there is provided a method of using an apparatus, the apparatus comprising a deformable member, the deformable member configured such that it is mechanically deformable between different configurations each associated with a respective plasmon resonance when the deformable member is exposed to incident electromagnetic radiation in that configuration, wherein the apparatus is configured such that one or more of the length of the deformable member in the configuration and the associated incident electromagnetic radiation are detectable, the method comprising one or more of:

detecting the incident electromagnetic radiation based on detection of the plasmon resonance of the respective configuration; and determining mechanical deformation of the deformable member based on detection of the plasmon resonance associated with a particular length of the deformable member.

The steps of any method disclosed herein do not have to be performed in the exact order disclosed, unless explicitly stated or understood by the skilled person.

Corresponding computer programs (which may or may not be recorded on a carrier) for implementing one or more of the methods disclosed herein are also within the present disclosure and encompassed by one or more of the described example embodiments.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

The above summary is intended to be merely exemplary and non-limiting.

**EP 3 096 128 A1**

Brief Description of the Figures

A description is now given, by way of example only, with reference to the accompanying drawings, in which:-

Figure 1 illustrates schematically a surface plasmon polariton;
Figure 2 illustrates schematically a localised surface plasmon;
Figure 3 illustrates schematically a typical experimental setup for measuring extinction spectra of nanoparticles;
Figure 4 illustrates schematically a typical extinction spectrum;
Figure 5a illustrates schematically one example of the present apparatus comprising a deformable member in a first configuration;
Figure 5b illustrates schematically the deformable member of Figure 5a in a second configuration;
Figure 6 illustrates schematically a change in the extinction spectrum caused by a variation in the aspect ratio of the deformable member;
Figure 7 illustrates schematically another example of the present apparatus comprising a deformable member interpositioned between first and second non-deformable plasmonic nanoparticles;
Figure 8 illustrates schematically mechanical deformation of the apparatus of Figure 7 from a first configuration to a second configuration;
Figure 9 illustrates schematically another example of the present apparatus comprising a plurality of deformable members;
Figure 10 illustrates schematically another example of the present apparatus configured for use in detecting one or more of electromagnetic radiation and mechanical deformation using a deformable member;
Figure 11 illustrates schematically the main steps of a method of making the present apparatus;
Figure 12 illustrates schematically the main steps of a method of detecting electromagnetic radiation using the present apparatus;
Figure 13 illustrates schematically the main steps of a method of detecting mechanical deformation using the present apparatus; and
Figure 14 illustrates schematically a computer-readable medium comprising a computer program configured to perform, control or enable the method steps of Figure 11, 12 and/or 13.

Description of Specific Aspects/Embodiments

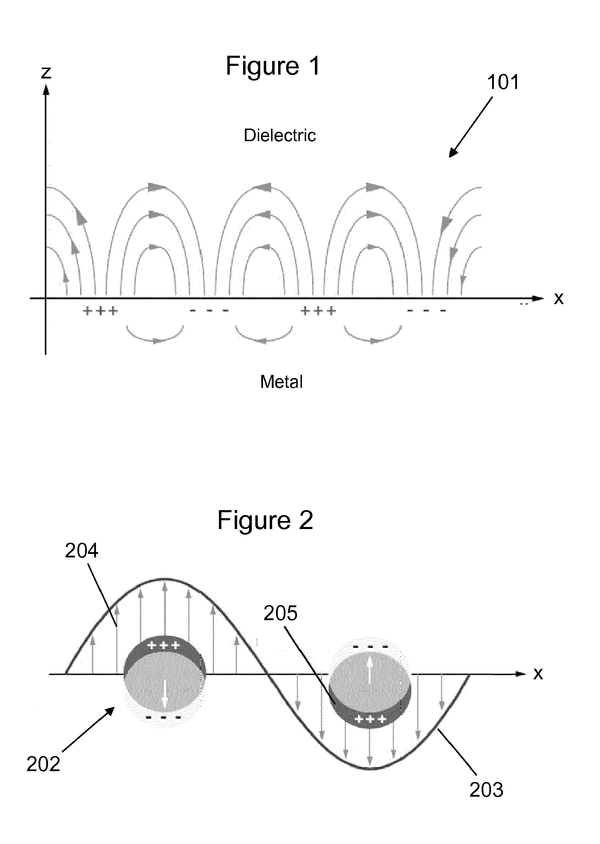

Figure 1 illustrates schematically a surface plasmon polariton 101. Surface plasmons are coherent delocalised electron oscillations which are generated at a metal/dielectric interface in response to excitation by incident electromagnetic radiation. The charge motion in a surface plasmon also creates electromagnetic fields which extend outside the metal. A surface plasmon polariton 101 is therefore the total excitation including both the charge motion and the associated electromagnetic field. This phenomenon forms the basis of several existing techniques for measuring adsorption of material onto metallic surfaces.

Figure 2 illustrates schematically a localised surface plasmon. Localised surface plasmons are change density oscillations confined to metallic nanoparticles 202. The illustrated example shows a plasmon oscillation on the surface of a metal sphere 202 in response to the electric field 204 of an incident electromagnetic wave 203. The displacement of the conduction electron charge cloud 205 is shown.

Excitation of localised surface plasmons by electromagnetic radiation results in strong light scattering, the appearance of intense surface plasmon absorption bands and an enhancement of the local electromagnetic fields. A localised surface plasmon resonance (referred to herein simply as a "plasmon resonance") is generated when the wavelength of the incident light on the nanoparticle is in resonance with an eigenmode of the nanoparticle plasmon oscillation. From Mie scattering theory, the resonance condition for the extinction cross-section for an incident plane wave on a metal nanoparticle is satisfied when,

$$\Re[\varepsilon_{metal}(\lambda)] + \chi\varepsilon_{diel} = 0 \qquad\qquad \text{(Equation 1)}$$

where $\varepsilon_{metal}$ and $\varepsilon_{diel}$ are the dielectric constants of the metal and dielectric material, respectively, and $\chi$ is a factor which is dependent on the geometry of the nanoparticle. The value of $\chi$ is 2 for a sphere, but may be as large as 20 for particle geometries with high aspect ratios (such as nanorods). Based on this equation, materials which possess a negative real and small positive imaginary dielectric constant are capable of supporting surface plasmons (such as silver and gold). Conditions for excitation are only satisfied, however, if the real dielectric constant of the metal is greater in magnitude than the real dielectric constant of the dielectric material.

The extinction spectrum (absorption plus scattering) of a metal sphere is given as:

$$E(\lambda) = \frac{24\pi^2 Na^3 \varepsilon_{out}^{3/2}}{\lambda \ln(10)} \left[ \frac{\varepsilon_i(\lambda)}{(\varepsilon_r(\lambda) + \chi \varepsilon_{out})^2} \right] \qquad \text{(Equation 2)}$$

where $\varepsilon_{in}$ and $\varepsilon_{out}$ are the dielectric constants of the metal nanoparticle and external environment, respectively, $\varepsilon_r$ and $\varepsilon_i$ are the real and imaginary components of the wavelength-dependent metal dielectric function, respectively, $Na$ is Avagadro's constant, and $\lambda$ is the wavelength of the incident radiation. The extinction of light associated with the nanoparticle is dependent on any changes in $\varepsilon_{out}$ (or refractive index, n, since both are related by $\varepsilon = n^2$).

Equations 1 and 2 show that the extinction spectrum is dependent on the local dielectric environment ($\varepsilon_{diel}$ and $\varepsilon_{out}$ in equations 1 and 2, respectively). Therefore, any changes in the local dielectric environment will cause a shift in the extinction wavelength maximum (resonance wavelength), $\lambda_{max}$, and a change in intensity. This can be used to detect the presence and/or concentration of analyte species on the surface of the nanoparticle or in the surrounding dielectric medium.

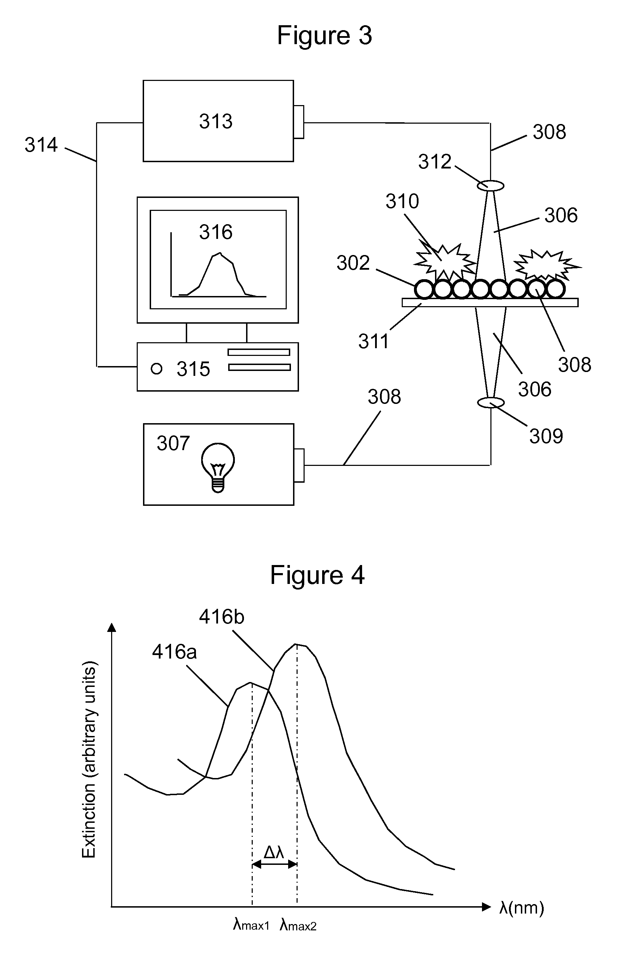

Figure 3 shows one approach to the measurement of nanoparticle plasmon resonance spectra - transmission surface plasmon resonance spectroscopy. Here, one measures the extinction spectrum of the nanoparticles by recording the wavelength dependence of light passing through the sample. In this example, light 306 from a source 307 is directed along an optical fibre 308 and focused by a lens 309 onto the specimen. The specimen is immersed in a dielectric medium (such as air, water or another solvent) and comprises a layer of nanoparticles 302 which are bound to analyte molecules 310 and supported on a transparent substrate 311. When a plasmon resonance is excited, the wavelengths of light causing the excitation are absorbed and/or scattered. The beam of illumination 306 is detected behind the specimen using the probe 312 of a spectrophotometer 313. Light incident on the probe is then directed to a charge-coupled device (CCD) camera (not shown) inside the spectrophotometer. The data is subsequently sent (via electrical cables 314, for example) to a computer 315 for processing, and an extinction spectrum 316 is displayed for analysis.

Figure 4 shows an example of a typical extinction spectrum which reveals the absorption and/or scattering of each wavelength of light. The transmission geometry yields the plasmon resonance wavelength as a maximum value in the extinction curve. The peaks from before and after the analytes are bound to the nanoparticles are denoted by numerals 416a and 416b, respectively, and the corresponding plasmon resonance wavelengths as $\lambda_{max1}$ and $\lambda_{max2}$. In this case, binding at the surface of the nanoparticles has resulted in a shift in peak wavelength, $\Delta\lambda$, as well as an increase in intensity.

Rather than using surface plasmon resonance spectroscopy to detect analyte species, the present application applies the technique to the detection/measurement of one or more of incident electromagnetic radiation and mechanical deformation (which can, in certain embodiments, also be used to detect secondary stimuli indirectly). Existing deformation sensors typically convert the mechanical deformation of a material into an electrical signal. The use of surface plasmon resonance spectroscopy, however, removes the need for electrical contacts (which is particularly advantageous for biomedical applications where the attachment of contacts can be difficult) and provides a highly sensitive system in which even nanoscale displacements of material can produce a detectable signal.

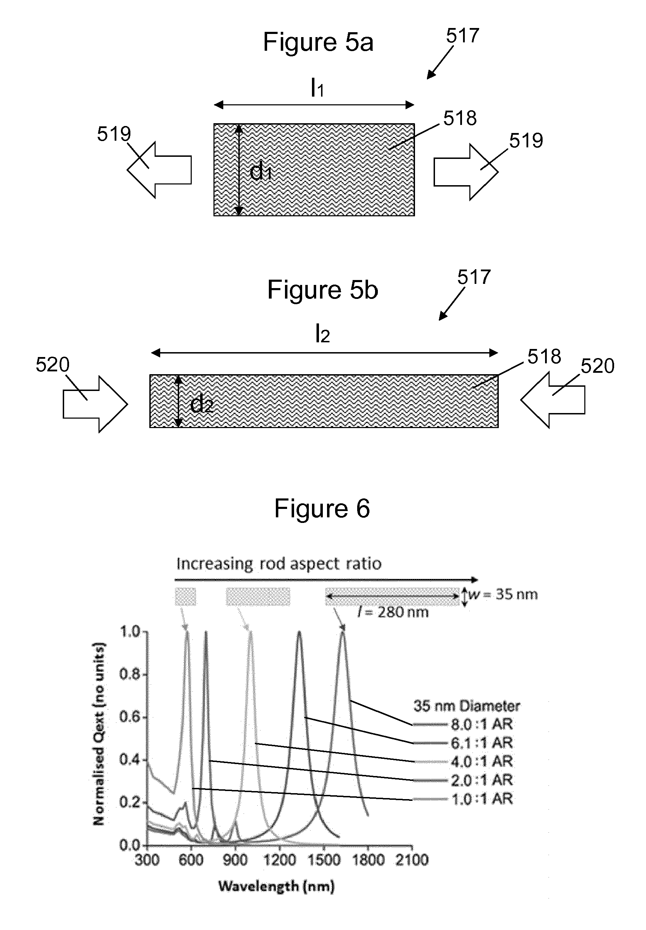

Figures 5a and 5b show one example of the present apparatus 517 in a first configuration and second configuration, respectively. The apparatus 517 comprises a deformable member 518 (which may or may not be reversibly deformable) configured such that it is mechanically deformable between different configurations each associated with a respective plasmon resonance when the deformable member 518 is exposed to incident electromagnetic radiation in that configuration. Since the plasmon resonance of a plasmonic nanoparticle is dependent upon the dimensions of the nanoparticle, changes in the length of the deformable member 518 caused by mechanical deformation cause a shift in the position (wavelength) of the plasmon resonance within the extinction spectrum. In practice, this means that the wavelength of electromagnetic radiation required to excite the plasmon resonance in the deformable member 518 also varies with the change in length.

In the first configuration shown in Figure 5a, the deformable member 518 has a length $l_1$ and diameter $d_1$. When a tensile stress 519 is applied to deform the deformable member 518 from the first configuration to the second configuration shown in Figure 5b, the length increases to b and the diameter decreases to $d_2$. In some cases, the deformable member 518 may be configured to enable reversible deformation from the second configuration (Figure 5b) back to the first configuration (Figure 5a) by relaxation of the material or via the application of a compressive stress 520 as shown. Also, with certain materials, a change in length of the deformable member 518 may not necessarily cause a detectable, significant or any change in the diameter (e.g. width/thickness) of the deformable member 518.

The shift in plasmon resonance with the length of the deformable member 518 can be exploited to enable detection of one or more of the incident electromagnetic radiation and the mechanical deformation. For example, if the length versus plasmon resonance wavelength is pre-calibrated over a range of values, a controlled amount of mechanical deformation may be used to tune the length of the deformable member 518 to a particular wavelength of electromagnetic radiation. In this scenario, the apparatus 517 may be configured to allow detection of the incident electromagnetic radiation based on detection of the plasmon resonance in the respective configuration. This is possible because the plasmon resonance will only be produced at the predefined length when the deformable member 518 is exposed to the associated wavelength of electromagnetic radiation. Therefore, if the plasmon resonance is excited, it follows that electromagnetic radiation of the associated wavelength must be present. In some cases, the size/height of the peak in the extinction spectrum may also be used to provide an indication of the intensity of the incident electromagnetic radiation.

If the plasmon resonance wavelength of the first configuration (Figure 5a) is known, the apparatus 517 may additionally or alternatively be configured to allow determination of the mechanical deformation of the deformable member 518 (e.g. to the second configuration shown in Figure 5b) based on detection of the plasmon resonance associated with a particular length of the deformable member 518. In this scenario, a shift in the plasmon resonance wavelength from the initial value indicates that a change in length (and therefore mechanical deformation of the deformable member 518) has occurred. Furthermore, a quantitative measure of the mechanical deformation may be determined if the length versus plasmon resonance wavelength is pre-calibrated over a range of values. This can be achieved by comparing the length associated with the plasmon resonance wavelength of the first configuration with the length associated with the plasmon resonance wavelength of the second configuration to determine the change in length of the deformable member 518.

The mechanical deformation itself may be caused by one or more secondary stimuli. For instance, it may result from thermal expansion/contraction of the apparatus 517, acceleration of the apparatus 517, an internal/external pressure acting on the apparatus 517, and/or exposure of the apparatus 517 to an electromagnetic field. In this way, detection/measurement of the mechanical deformation may be used to indirectly detect/measure the secondary stimuli causing the mechanical deformation. As one example, the apparatus 517/deformable member 518 may be configured to undergo mechanical deformation with external pressure, which might be useful for monitoring the pressure within a sealed container. If a chemical reaction within the apparatus 517 generates a gas as one of the products, then mechanical deformation of the deformable member 518 due to a build-up in internal pressure could be indicative of a successful reaction. Also, if the apparatus 517/deformable member 518 comprises a piezoelectric material, then a change in length could be used to indicate the presence of an electric field. These are just some examples of secondary stimuli, and many others are also possible.

Discrete dipole approximation simulations were performed to demonstrate the shift in plasmon resonance wavelength with changes in the length of a plasmonic nanoparticle. In these simulations, extinction spectra were calculated for 35nm diameter gold nanorods immersed in water having aspect ratios varying from 1:1 (35nm in length) to 8:1 (280nm in length). When an individual nanorod is illuminated by electromagnetic radiation, it produces two main plasmonic resonances (amongst others): one which corresponds to excitation along the short/transverse axis (transverse resonance), and another which corresponds to excitation along the long/longitudinal axis (dipole resonance). The size and position of these resonances within the extinction spectrum depends on the size, shape and material of the nanorod.

Figure 6 shows the simulated extinction spectra. As can be seen from these graphs, the wavelength of the dipole resonance increased (red-shifted) from about 580nm to about 1620nm as the length increased from 35nm to 280nm. If these same nanorods were immersed in air instead of water, the plasmonic resonances would be slightly blue-shifted within the optical spectrum. Furthermore, whilst shifts in the dipole resonance are shown in this figure, transverse, quadrupole or other higher order resonances may be used instead (although shifts in the transverse resonance may be relatively small with respect to shifts in other resonances and can be largely dependent upon the diameter of the material rather than the length).

As mentioned above, this sensitive shift in resonance wavelength with plasmonic nanoparticle length enables the optical response of the deformable member to be tuned to a particular wavelength for the detection of incident electromagnetic radiation, and/or allows determination of a change in length of the deformable member which can be used to detect/measure its mechanical deformation. To enable this functionality, it must be possible to vary the length of the deformable member (with or without a variation in the width or thickness). In this regard, the deformable may be one or more of a stretchable and compressible member configured to allow the length of the deformable member to be increased or decreased between the respective configurations by an applied tensile or compressive stress, respectively.

Although the simulations shown in Figure 6 relate to the plasmon resonances of gold nanorods, any size, shape and material of deformable member may be used provided that it exhibits the above-mentioned behaviour. Examples of suitable materials include conductive nanofoams, nanopolymers and nanoelastomers comprising one or more of a noble metal, gold, platinum, silver and aluminium. Also, whilst electromagnetic radiation in the low infrared range was used in the simulations, the type of electromagnetic radiation is dependent upon the size, shape and material of the deformable member and is therefore variable. In this respect, at least one of the size, shape and material of the deformable member may be configured such that the plasmon resonance is exhibited when exposed to one or more of ultraviolet, visible and infrared radiation. For example, a deep infrared sensor could be configured by increasing the aspect ratio of the deformable member. Similarly, a visible sensor could be configured by reducing the aspect ratio of the deformable member or replacing the gold with silver, and an ultraviolet sensor could be configured by replacing the gold with aluminium. Furthermore, in some cases, the deformable member may be configured such that at least two of the lengths of deformable member are associated with different types of incident electromagnetic radiation so that the apparatus can be used over a broad range of wavelengths.

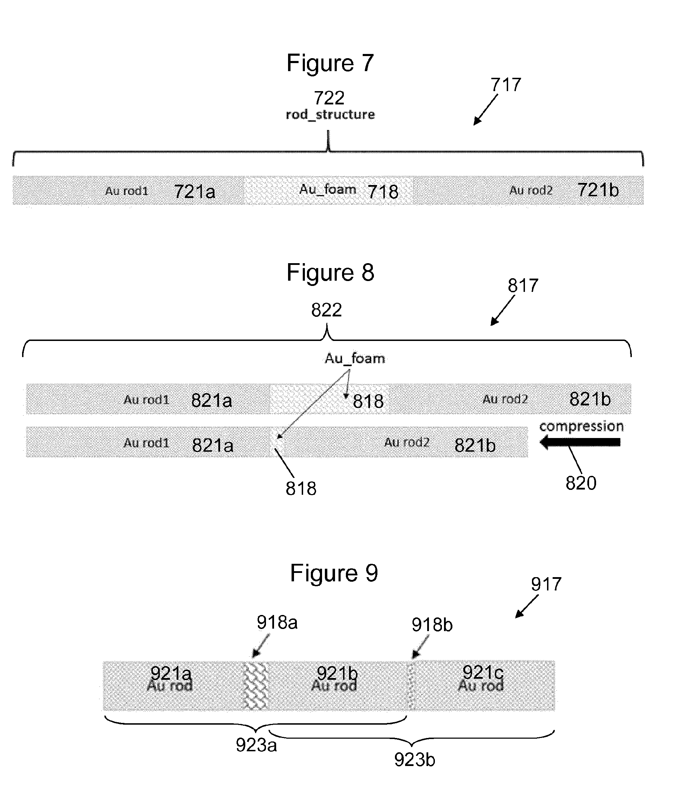

Figure 7 shows another example of the present apparatus 717. In this example, the apparatus comprises a deformable member 718 interpositioned between first 721a and second 721 b non-deformable plasmonic nanoparticles (which may comprise one or more of nanorods, nanowires and nanotubes). The deformable member 718 and non-deformable plasmonic nanoparticles 721 a,b collectively form a single combined interpositioned plasmonic nanoparticle 722 configured to exhibit a combined plasmon resonance when exposed to incident electromagnetic radiation. In this way, mechanical deformation of the deformable member 718 produces a change in the combined plasmon resonance of the single combined interpositioned plasmonic nanoparticle 722 (rather than the plasmon resonance of the deformable member 718 *per se).*

Also in this example, the deformable member 718 and non-deformable plasmonic nanoparticles 721 a,b each have a long axis and a short axis, the long axis of the deformable member 718 being collinear with the long axes of the first 721 a and second 721 b non-deformable plasmonic nanoparticles. This arrangement (although not absolutely necessary) is beneficial for monitoring changes in the dipole resonance because of the linear configuration of the single combined plasmonic nanoparticle 722.

As shown in Figure 7, the deformable member 718 and non-deformable plasmonic nanoparticles 721 a,b may comprise different structural forms of the same nanomaterial (e.g. one or more of a noble metal, gold, platinum, silver and aluminium). In this example, the deformable member 718 is formed from gold foam and the non-deformable plasmonic nanoparticles 721 a,b are formed from solid gold nanorods. In other examples, however, the deformable member 718 and non-deformable plasmonic nanoparticles 721 a,b may comprise entirely different materials provided that the single combined plasmonic nanoparticle 722 is able to exhibit a combined plasmon resonance when exposed to incident electromagnetic radiation. There is also no need for the first 721 a and second 721 b non-deformable plasmonic nanoparticles to be identical. Therefore, the first non-deformable plasmonic nanoparticle 721 a may or may not have one or more of the same size, shape and material as the second non-deformable plasmonic nanoparticle 721 b.

Figure 8 shows mechanical deformation of the apparatus 817 of Figure 7 from a first configuration to a second configuration via the application of a compressive stress 820 along the longitudinal axis of the single combined plasmonic nanoparticle 822. The applied stress produces a corresponding compressive strain on the deformable member 818 thereby reducing the total length of the single combined plasmonic nanoparticle 822. As described previously, this change in length causes an associated shift in the plasmon resonance wavelength when the single combined plasmonic nanoparticle 822 is exposed to incident electromagnetic radiation, which can be used to detect the electromagnetic radiation or mechanical deformation. A tensile stress may be applied instead of the compressive stress 820 to cause an increase in the total length of the single combined plasmonic nanoparticle 822. Also, rather than using a non-deformable plasmonic nanoparticle 820a,b at either end of the deformable member 818 as shown in Figures 7 and 8, the apparatus 817 may only comprise a non-deformable plasmonic nanoparticle 820a at one end (not shown).

Figure 9 shows another example of the present apparatus 917, this time comprising a plurality of deformable members 918a,b. In this example, the apparatus 917 comprises a further non-deformable plasmonic nanoparticle 921c in addition to the first 921a and second 921 b non-deformable plasmonic nanoparticles, the nanoparticles 921a-c arranged such that each plasmonic nanoparticle 921a-c is connected to an adjacent plasmonic nanoparticle 921a-c by a deformable member 918a,b. Although only one further nanoparticle 921c is shown here, the apparatus 917 may comprise a plurality of further nanoparticles 921c. Furthermore, whilst the deformable member 918a connecting one pair 923a of adjacent plasmonic nanoparticles 921 a,b is different to the deformable member 918b connecting another pair 923b of adjacent plasmonic nanoparticles 921 b,c in this example (e.g. different size, shape and material), they could be the same.

The apparatus 917 of Figure 9 could be used to allow the detection/measurement of mechanical deformation at different regions of the apparatus 917 (by providing deformable members 918a,b at different points along the length of the structure), it may allow the apparatus 917 to better conform to the shape of the surrounding environment (e.g. if the apparatus 917 was to be disposed within a confined space), and may enable the apparatus 917 to be used with different types of electromagnetic radiation (e.g. by increasing the overall length of the structure).

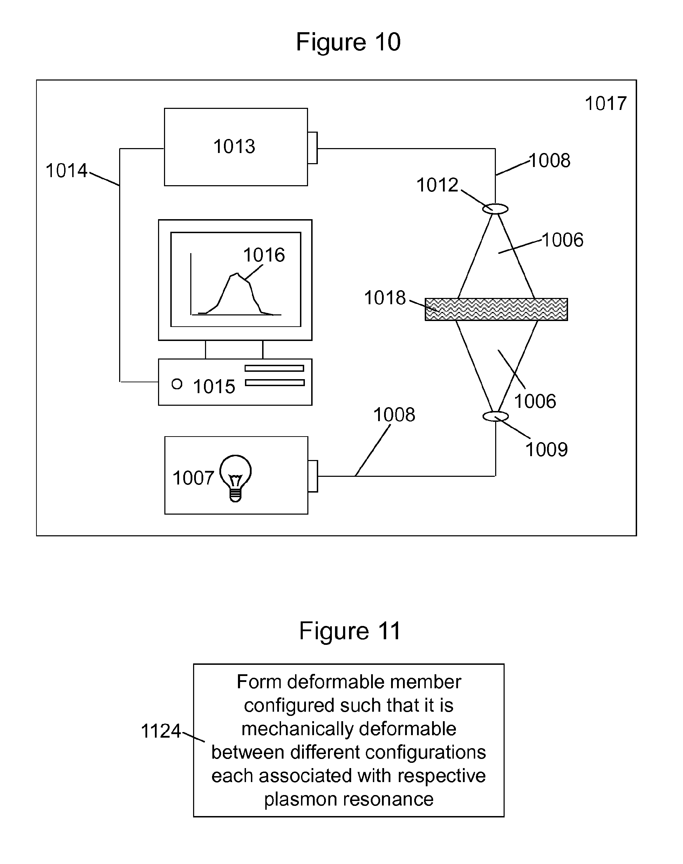

Figure 10 shows another example of the present apparatus 1017. The apparatus 1017 may be one or more of an electronic device, a portable electronic device, a portable telecommunications device, a mobile phone, a personal digital assistant, a tablet, a phablet, a desktop computer, a laptop computer, a server, a smartphone, a smartwatch, smart eyewear, a sensor, a dynamically-tunable sensor, a mechanical deformation sensor, and a module for one or more of the same.

In this example, the apparatus 1017 comprises the deformable member 1018 (with or without the non-deformable plasmonic nanoparticles) described previously, together with the spectroscopy equipment of Figure 3. In particular, the spectroscopy equipment comprises a light source 1007 for generating the electromagnetic radiation 1006, a lens 1009 for focussing the electromagnetic radiation 1006 onto the deformable member 1018, a probe 1012 for detecting the electromagnetic radiation 1006 behind the specimen after absorption/scattering, optical fibres 1008 for directing the electromagnetic radiation 1006 to the lens 1009 and from the probe 1012, a spectrophotometer 1013 for measuring the absorption/scattering of the electromagnetic radiation 1006 by the deformable member 1018, an electrical cable 1014 for transferring the absorption/scattering data from the spectrophotometer 1013 to a computer 1015, and a computer 1015 for processing and displaying the absorption/scattering data as an extinction spectrum 1016.

The computer 1015 itself may be configured to detect the plasmon resonance to determine the presence of the incident electromagnetic radiation 1006. In some cases, the computer may be further configured to measure the height of the peak in the extinction spectrum 1016 to determine the intensity of the incident electromagnetic radiation 1006. Additionally or alternatively, the computer 1015 may be configured to detect any change in the plasmon resonance relative to an initial measurement to determine mechanical deformation of the deformable member 1018. The computer 1015 may also be configured to determine the magnitude of mechanical deformation based on the detected change in plasmon resonance.

To achieve this, the computer 1015 may comprise a storage medium (not shown) configured to store the absorption/scattering data from the spectrophotometer 1013 and a processor (not shown) configured to perform the above-mentioned calculations. The storage medium may also comprise the plasmon resonance wavelength corresponding to the initial configuration of the deformable member 1018, and/or pre-calibrated length versus plasmon resonance wavelength data for the deformable member 1018 over a range of values, for use in these calculations. The processor may also be configured for general operation of the computer 1015 by providing signalling to, and receiving signalling from, the other components to manage their operation. In addition, the storage medium may be configured to store computer code configured to perform, control or enable operation of the computer 1015. The storage medium may also be configured to store settings for the other components such that the processor can retrieve the settings to manage their operation.

The processor may be a microprocessor, including an Application Specific Integrated Circuit (ASIC). The storage medium may be a temporary storage medium such as a volatile random access memory. On the other hand, the storage medium may be a permanent storage medium such as a hard disk drive, a flash memory, or a non-volatile random access memory.

Figure 11 illustrates schematically a method of making the apparatus described herein. The method generally comprises forming a deformable member configured such that it is mechanically deformable between different configurations each associated with a respective plasmon resonance when the deformable member is exposed to incident electromagnetic radiation in that configuration 1124. The deformable member may be formed (for example) by depositing a plasmonic metal onto a preformed foam, polymer or elastomer template using evaporation, sputtering, chemical vapour deposition or atomic layer deposition. The template may be a non-metallic foam, or a gyroid structure formed by removing one phase of a block copolymer. In some cases, the template material may be removed after deposition of the plasmonic metal (e.g. by wet etching).

When the apparatus also comprises non-deformable plasmonic nanoparticles, any porous deformable member used with the nanoparticles should have pore sizes in the nanometre range. This can be achieved by using a gyroid structure or a nanoporous foam as the template structure. On-wire lithography may be used to form a one-dimensional gapped nanorod structure via an aluminium anode oxide template. In this approach, the first nanorod is electroplated followed by the deposition of the deformable member and second nanorod. The resulting structure is then removed from the template.

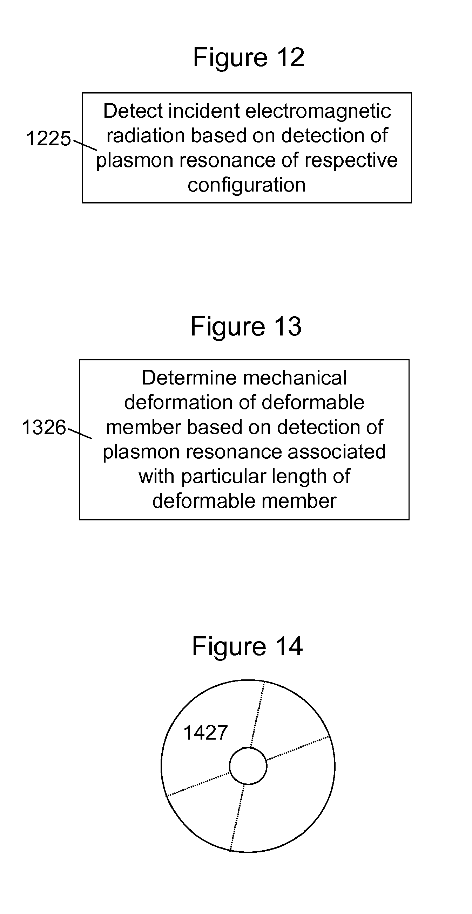

Figure 12 illustrates schematically a method of using the apparatus described herein. The method generally comprises detecting incident electromagnetic radiation based on detection of the plasmon resonance associated with the respective configuration of the deformable member 1225.

Figure 13 illustrates schematically another method of using the apparatus described herein. The method generally comprises determining mechanical deformation of the deformable member based on detection of the plasmon resonance associated with a particular length of the deformable member 1326.

Figure 14 illustrates schematically a computer/processor readable medium 1427 providing a computer program according to one embodiment. The computer program may comprise computer code configured to perform, control or enable the method steps 1124, 1225, 1326 of Figure 11, 12 and/or 13. In this example, the computer/processor readable medium 1427 is a disc such as a digital versatile disc (DVD) or a compact disc (CD). In other embodiments, the computer/processor readable medium 1427 may be any medium that has been programmed in such a way as to carry out an inventive function. The computer/processor readable medium 1427 may be a removable memory device such as a memory stick or memory card (SD, mini SD, micro SD or nano SD).

Other embodiments depicted in the figures have been provided with reference numerals that correspond to similar features of earlier described embodiments. For example, feature number 1 can also correspond to numbers 101, 201, 301 etc. These numbered features may appear in the figures but may not have been directly referred to within the description of these particular embodiments. These have still been provided in the figures to aid understanding of the further embodiments, particularly in relation to the features of similar earlier described embodiments.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the disclosure.

While there have been shown and described and pointed out fundamental novel features as applied to different embodiments thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment may be incorporated in any other disclosed or described or suggested form or embodiment as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising a deformable member, the deformable member configured such that it is mechanically deformable between different configurations each associated with a respective plasmon resonance when the deformable member is exposed to incident electromagnetic radiation in that configuration, wherein the apparatus is configured such that one or more of the length of the deformable member in the configuration and the associated incident electromagnetic radiation are detectable.

2. The apparatus of claim 1, wherein the apparatus is configured to allow detection of the incident electromagnetic radiation based on detection of the plasmon resonance in the respective configuration.

3. The apparatus of claim 1 or 2, wherein the deformable member is configured such that at least two of the lengths of the deformable member are associated with different types of incident electromagnetic radiation.

4. The apparatus of any preceding claim, wherein the apparatus is configured to allow determination of the mechanical deformation of the deformable member based on detection of the plasmon resonance associated with a particular length of the deformable member.

5. The apparatus of any preceding claim, wherein the deformable member is one or more of a stretchable and compressible member configured to allow the length of the deformable member to be increased or decreased between the respective configurations by the mechanical deformation.

6. The apparatus of any preceding claim, wherein the deformable member is provided adjacent to a non-deformable plasmonic nanoparticle, the deformable member and the non-deformable plasmonic nanoparticle collectively forming a single combined adjacent plasmonic nanoparticle configured to exhibit a combined plasmon resonance when exposed to the incident electromagnetic radiation, and wherein the mechanical deformation produces a change in the combined plasmon resonance of the single combined adjacent plasmonic nanoparticle.

7. The apparatus of any preceding claim, wherein the deformable member is interpositioned between first and second non-deformable plasmonic nanoparticles, the deformable member and non-deformable plasmonic nanoparticles collectively forming a single combined interpositioned plasmonic nanoparticle configured to exhibit a combined plasmon resonance when exposed to the incident electromagnetic radiation, and wherein the mechanical deformation produces a change in the combined plasmon resonance of the single combined interpositioned plasmonic nanoparticle.

8. The apparatus of claim 6 or 7, wherein the deformable member and non-deformable plasmonic nanoparticles comprise different structural forms of the same material.

9. The apparatus of any of claims 6 to 8, wherein the non-deformable plasmonic nanoparticles comprise one or more of nanorods, nanowires and nanotubes.

10. The apparatus of any preceding claim, wherein the deformable member comprises a reversibly deformable material.

11. The apparatus of any preceding claim, wherein the deformable member comprises one or more of a conductive nanofoam, a conductive nanopolymer and a conductive nanoelastomer.

12. The apparatus of any preceding claim, wherein the apparatus/deformable member is configured such that the mechanical deformation results from one or more of thermal expansion/contraction of the apparatus, acceleration of the apparatus, an internal/external pressure acting on the apparatus, and exposure of the apparatus to an electromagnetic field.

13. A method of making an apparatus, the method comprising:

forming a deformable member configured such that it is mechanically deformable between different configurations each associated with a respective plasmon resonance when the deformable member is exposed to incident electromagnetic radiation in that configuration, wherein the apparatus is configured such that one or more of the length of the deformable member in the configuration and the associated incident electromagnetic radiation are detectable.

14. A method of using an apparatus,
the apparatus comprising a deformable member, the deformable member configured such that it is mechanically deformable between different configurations each associated with a respective plasmon resonance when the deformable member is exposed to incident electromagnetic radiation in that configuration, wherein the apparatus is configured such that one or more of the length of the deformable member in the configuration and the associated incident electromagnetic radiation are detectable,
the method comprising one or more of:

detecting the incident electromagnetic radiation based on detection of the plasmon resonance of the respective configuration; and
determining mechanical deformation of the deformable member based on detection of the plasmon resonance associated with a particular length of the deformable member.

**15.** A computer program comprising computer code configured to perform the method of claim 13 or 14.

## Figure 1

## Figure 2

# Figure 3

# Figure 4

## Figure 5a

## Figure 5b

## Figure 6

## Figure 7

722
rod_structure

717

| Au rod1 | 721a | Au_foam | 718 | Au rod2 | 721b |

## Figure 8

817

822

Au_foam

| Au rod1 | 821a | 818 | Au rod2 | 821b |

| Au rod1 | 821a | Au rod2 | 821b | compression |

818

820

## Figure 9

917

918a

918b

| 921a Au rod | 921b Au rod | 921c Au rod |

923a

923b

# Figure 10

# Figure 11

1124 — Form deformable member configured such that it is mechanically deformable between different configurations each associated with respective plasmon resonance

# Figure 12

1225 — Detect incident electromagnetic radiation based on detection of plasmon resonance of respective configuration

# Figure 13

1326 — Determine mechanical deformation of deformable member based on detection of plasmon resonance associated with particular length of deformable member

# Figure 14

1427

Europäisches
Patentamt

European
Patent Office

Office européen
des brevets

# EUROPEAN SEARCH REPORT

Application Number

EP 15 16 8036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VENKATA ANANTH TAMMA ET AL: "Tunable resonance in flexible plasmonic nanostructures", LASERS AND ELECTRO-OPTICS (CLEO), 2012 CONFERENCE ON, IEEE, 6 May 2012 (2012-05-06), pages 1-2, XP032247493, ISBN: 978-1-4673-1839-6 | 1-6,9-15 | INV. G01N21/31 G01N21/552 |
| Y | * figures 1-2 * | 7 | |
| X | JP 2012 102221 A (NAT INST FOR MATERIALS SCIENCE; NAGOYA INST TECHNOLOGY) 31 May 2012 (2012-05-31) | 1-6,10, 12-15 | |
| Y | * [0033]-[0034], [0037]-[0042], [0076]-[0077]; figures 1-4, 11 * | 7 | |
| X | MILLYARD MATTHEW G ET AL: "Stretch-induced plasmonic anisotropy of self-assembled gold nanoparticle mats", APPLIED PHYSICS LETTERS, AMERICAN INSTITUTE OF PHYSICS, 2 HUNTINGTON QUADRANGLE, MELVILLE, NY 11747, vol. 100, no. 7, 13 February 2012 (2012-02-13), pages 73101-73101, XP012165925, ISSN: 0003-6951, DOI: 10.1063/1.3683535 [retrieved on 2012-02-13] | 1-6,10, 12-15 | |
| Y | * figures 1-2 * | 7 | |
| Y | US 2011/166045 A1 (DHAWAN ANUJ [US] ET AL) 7 July 2011 (2011-07-07) * figures 25-26 * | 7 | |

TECHNICAL FIELDS SEARCHED (IPC)

G01N

-/--

The present search report has been drawn up for all claims

| Place of search | Date of completion of the search | Examiner |
|---|---|---|
| Munich | 26 November 2015 | Mason, William |

EPO FORM 1503 03.82 (P04C01)

Europäisches Patentamt
European Patent Office
Office européen des brevets

# EUROPEAN SEARCH REPORT

Application Number

EP 15 16 8036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LINGLU YANG ET AL: "Calibration of Silver Plasmon Rulers in the 1-25 nm Separation Range: Experimental Indications of Distinct Plasmon Coupling Regimes", JOURNAL OF PHYSICAL CHEMISTRY C, vol. 114, no. 11, 25 March 2010 (2010-03-25), pages 4901-4908, XP055231578, ISSN: 1932-7447, DOI: 10.1021/jp911858v * Section 3.2; figure 4 * | 7 | |
| Y | US 2010/053598 A1 (KWON SUNGHOON [KR] ET AL) 4 March 2010 (2010-03-04) * figures 1A-1B * | 7 | |
| A | V V Apyari ET AL: "Synthesis and optical properties of polyurethane foam modified with silver nanoparticles Synthesis and optical properties of polyurethane foam modified with silver nanoparticles", Nat. Sci.: Nanosci. Nanotechnol, 1 January 2012 (2012-01-01), pages 15001-7, XP055231589, Retrieved from the Internet: URL:http://iopscience.iop.org/article/10.1088/2043-6262/3/1/015001/meta;jsessionid=D8EC9A6BC5E7C338A8DBB6DFBF3CF1AA.c3.iopscience.cld.iop.org [retrieved on 2015-11-26] * figure 7 * | 1-15 | |
| A | US 2011/189783 A1 (ANDREW PIERS [GB] ET AL) 4 August 2011 (2011-08-04) * figures 1-4 * | 1-15 | TECHNICAL FIELDS SEARCHED (IPC) |

The present search report has been drawn up for all claims

| Place of search | Date of completion of the search | Examiner |
|---|---|---|
| Munich | 26 November 2015 | Mason, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 8036

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2015

| Patent document cited in search report | | Publication date | Patent family member(s) | | Publication date |
|---|---|---|---|---|---|
| JP 2012102221 | A | 31-05-2012 | JP | 5565731 B2 | 06-08-2014 |
| | | | JP | 2012102221 A | 31-05-2012 |
| US 2011166045 | A1 | 07-07-2011 | NONE | | |
| US 2010053598 | A1 | 04-03-2010 | NONE | | |
| US 2011189783 | A1 | 04-08-2011 | CN | 102741681 A | 17-10-2012 |
| | | | EP | 2531838 A1 | 12-12-2012 |
| | | | KR | 20120123504 A | 08-11-2012 |
| | | | US | 2011189783 A1 | 04-08-2011 |
| | | | WO | 2011095684 A1 | 11-08-2011 |

EPO FORM P0459

For more details about this annex : see Official Journal of the European Patent Office, No. 12/82